Europäisches Patentamt

European Patent Office

Office européen des brevets

(11) Publication number: **0 340 818**
**A1**

## EUROPEAN PATENT APPLICATION

(21) Application number: **89200813.7**

(22) Date of filing: **30.03.89**

(51) Int. Cl.⁴: **B29C 67/14 , B29C 71/02 , C08J 5/24**

(30) Priority: **05.04.88 NL 8800843**

(43) Date of publication of application:
**08.11.89 Bulletin 89/45**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Peerlkamp, Erik Rijkele**
**Klein Holtum 39**
**NL-6121 EG Born(NL)**
Inventor: **Steffanie, Leonardus Gerardus**
**Bandstraat 6**
**NL-6121 ZG Born(NL)**

(54) Polyamide moulded article and a process for the production thereof.

(57) The invention relates to polyamide 4.6 moulded articles containing a continuous filament structure and a process for producing such articles by means of a moulding method using low-molecular-weight polyamide 4.6, after which the solid low-molecular-weight moulded articles obtained after cooling is subjected to a heat treatment at a temperature between 220ɥC and the melting temperature.

EP 0 340 818 A1

## POLYAMIDE MOULDED ARTICLE AND A PROCESS FOR THE PRODUCTION THEREOF

The invention relates to fibre-reinforced polyamide moulded articles. The effect of the fibre reinforcement is the greatest if the fibres already constitute a coherent whole themselves, for example a fabric, and if the fibres are long, for example in the same order of magnitude as the moulded article. A problem of such a fibre reinforcement is that there are only a limited number of available processes for incorporating it in a moulded article. A known process is, for example, compressing such a fibre reinforcement between two layers of polymer that is heated to above the softening point to that effect. In this manner only very simple shapes can be realized. Another method for incorporating such a continuous filament reinforcement into a polymer matrix is rotational casting. This method can only be applied to polymers with a very low viscosity. The same applies to the process in which the reinforcing fabric already present in the mould is incorporated by injection moulding.

The aforementioned methods are usually not suitable for polyamides whose molecular weight is sufficiently high to obtain moulded articles with satisfactory mechanical properties. Only in the case of polyamides based on lactams, complex shapes with continuous filament reinforcement have been produced with the aid of so-called reactive systems in the mould (RIM). In this process molten monomer and a catalyst system are introduced into the mould and polymerized there. For various reasons such a process cannot be applied to polyamides produced by polycondensation of diamides and dicarboxylic acids. For example, in polycondensation a substantial amount of water is produced, which can be removed with great difficulty only, and the reaction time of the polymerization is so long that only a very low production per mould can be realized. Polytetramethylene adipamide, polyamide 4.6, in particular, has a high melt viscosity in the temperature range in which it can be readily processed in the melt to form mechanically strong objects. The US patent publication 4446304 mentions, for example, that the relative viscosity of the polytetramethylenediamine used must be at least 2.5 to present good mechanical properties. Such high molecular weight polyamide 4.6 cannot be processed into moulded articles with a continuous fibre reinforcement, in which the reinforcement is entirely incorporated into the polyamide matrix, by means of existing moulding techniques.

The aim of the invention, is therefore to find a practical process for the production of moulded polyamide articles with a continuous filament reinforcement and the moulded polyamide article obtainable by the process.

The process of the invention for the production of a moulded article incorporating a continuous fibre reinforcement in a polyamide matrix by casting the polyamide matrix around the continuous fibre reinforcement, that is contained in a mould, is characterized in that the polyamide has low molecular weight and consist mainly of tetramethyleneadipamide units, and that after cooling the matrix to a temperature below the solidification temperature the low molecular weight moulded article, thus obtained, is subjected to a heat treatment in the solid phase at a temperature of between 220ºC and the melting point of the polyamide.

Preferably, a temperature between 240 and 280ºC is chosen for the heat treatment.

Although it may be expected that the low-molecular-weight polyamide will condense further with formation of water during the processing in the melt, it has been found, most surprisingly, that under the usual injection moulding conditions the polyamide matrix contains no significant amount of incorporated gas bubbles and that the fibre reinforcement is entirely surrounded by the polyamide matrix.

The after-condensation process is continued during the heat treatment. The duration of this heat treatment may vary within wide limits and is partly determined by the temperature of the treatment, the thermal history of the moulded article and the desired properties of the moulded article. In general, at least 1/4 hour is necessary, the maximum treatment time, being limited exclusively by the long-term thermal stability of the polyamide, possibly amounting to a few days if necessary. For practical reasons the treatment time will usually be limited to 24 hours. Such long treatment times are, however, usually not necessary, because very good mechanical properties are already obtained after much shorter treatment times, even in the case of moulded articles with thick walls.

The relative viscosity of the low-molecular-weight polytetramethylene adipamide is between 1.5 and 2.3. At lower relative viscosity values too many gas bubbles are incorporated during the moulding process; above 2.3 the melt viscosity is too high, which results in deformation of the fibre structure and insufficient impregnation of the fibre structure with the polyamide. The relative viscosity is preferably chosen between 1.7 and 2.1.

The relative viscosity of the polyamide in the moulded article after the heat treatment is at least 2.3, preferably at least 2.5.

The moulded polyamide article incorporating a continuous fibre reinforcement obtainable by the process of the invention is characterized in that the polyamide consists mainly of tetramethylene adipamide units and has a relative viscosity, measured on a 1 gram solution in 100 ml 96% (wt) sulfuric acid, of at least 2.3.

It is remarkable that the moulded articles obtained by the process according to the invention are much stiffer than would be expected on the basis of the molecular weight of the polyamide. They also show a much better impact resistance. Further research has shown that the unexpected improved properties are ascribable to a greatly increased crystallinity of the polyamide in the moulded articles obtainable by the process of the invention.

The moulded polyamide article incorporating a continuous fibre reinforcement according to the invention is characterized in that the polyamide consists mainly of polytetramethylene adipamide units and has an increased crystallinity of the polyamide, expressed as a first melting enthalpy, which is at least 30 joule per gram higher, than the melting enthalpy determined after melting and subsequent solidification of the polyamide, the first melting enthalpy being determined on a sample of the moulded article by differential scannnig calorimetry (DSC), with a heating rate of 20$\alpha$C per minute, and the second melting enthalpy being determined after the molten polyamide has been cooled with a cooling rate of 20$\alpha$C per minute until below its crystallisation temperature and after complete solidification has been reheated with a heating rate of 20$\alpha$C per minute.

A suitable temperature cycle is heating from 40$\alpha$C to 320$\alpha$C at 20$\alpha$C per minute, then maintaining a temperature of 320$\alpha$C for 3 minutes and cooling to 60$\alpha$C at 20$\alpha$C per minute, after which the cycle can be repeated.

Preferably the first melting enthalpy is at least 40 Joule per gram higher.

The polytetramethyleneadipamide in the moulded article according to the invention may contain a minor amount, for example at most about 25 wt.%, of other polymer units, for example units derived from other diamines or dicarboxylic acids, lactams, imide or ester groups. The concentration of other units is preferably limited to 15 wt.%, homopolyamide being the most preferable.

The polyamide may contain the usual additives for instance stabilisors, pigments, colors, mould release agents, anti-friction agents and other polymers for instance impact resistance improving polymers.

Moulded articles are articles cast in a mould or articles obtained by extrusion, for instance reinforced tubing or rods containing one or more continuous fibre bundles.

The continuous fibre structure may in principle have any shape, for example a bundle, fabric, staple fibres and woven bundles, and may consist of a large number of materials, for example metals, such as nickel, iron or copper, inorganic compounds such as mineral fibres, rock wool or glass and organic compounds such as aramides or liquid crystalline polymers and carbon. The concentration of fibre material may vary within wide limits, for example between 1 and 50 wt.%, preferably between 3 and 35 wt.%. If metal or metallized fibre materials are used, a more effective electromaghetic shielding can be obtained than if the same amount of fibre is mixed in loosely.

Example 1

Compressed powder tablets of polyamide 4.6 with an $\eta$rel of 1.89 were injection moulded in an Arburg Allrounder 200 at a melt temperature of 305$\alpha$C and a mould temperature of 120$\alpha$C to form a plate of 10 x 15 cm with a thickness of 1.6 mm. A staple glass mat (Continuous filament mat of 450 g/m2) had been placed in the centrally injected mould. The average fibre length was more than 5 cm. The cycle time was 40 seconds. The plate obtained presented a uniform thickness and an evenly distributed fibre mat and had sufficient mechanical strength for further processing. The plate did not show a significant amount of incorporated gas bubbles. The plate was then subjected to a heat treatment for 3 hours at 260$\alpha$C in a nitrogen atmosphere containing 25 vol.% water vapour.

Comparative Example A

In the mould of example 1, starting from STANYL TW 200F6 a glass filled plate was injection moulded under identical injection moulding circumstances.

STANYL TW 200 F6 is a commercial 30% wt glasfibre (250$\mu$) filled polyamide 4.6 ($\eta_{rel}$ = 2.9) grade, produced by DSM the Netherlands.

The mechanical properties of this plate are given in table 1, together with those of example 1.

Although only 20% (wt) glass is present in the example according to the invention mechanical properties are equal or better than those of a conventional 30% (wt) glass filled articles.

Table 1

| | example 1 | | comp. exmpl. A |
|---|---|---|---|
| | after injection moulding | after heat treatment | |
| $\eta$ rel | 1.99 | 2.9 | 2.8 |
| $\Delta$ Hm1 (J/g) | 73.6 | 126 | 95.1 |
| $\Delta$ Hm2 (J/g) | 82.2 | 84.3 | 83.6 |
| G " at 120¤C (Pa) | -- | $85.10^7$ | $84.10^7$ |
| Izod (notched) (KJ/m$^2$) | brittle | 30.5 | 11 |

Comparative example B

Example 1 was repeated using a polyamide 4.6 with a $\eta_{rel}$ of 2.8. The glass mat was pushed to one side. The polyamide penetrated the glass fibre mass to a limited extent only.

Example 2 and comparative example C

Example 1 was repeated with polyamide 4.6 with different $\eta_{rel}$ values. The results are given below.

| $\eta_{rel}$ | result |
|---|---|
| 1.2 | considerable foaming. |
| 1.5 | slight foaming. |
| 1.7 | no significant amount of incorporated gas bubbles: the mould was filled completely. |
| 1.9 | no significant amount of incorporated gas bubbles: the mould was filled completely. |
| 2.1 | no significant amount of incorporated gas bubbles: the mould was filled completely. |
| 2.3 | no significant amount of incorporated gas bubbles: the glass mat was slightly deformed. |
| 2.5 | no significant amount of incorporated gas bubbles: the mould was not completely filled. |

Example 3 and comparative example D

Different stainless steel mats, Bekitherm of Bekaert, Belgium, containing from about 30 to 45 mg metal per cm$^2$ were placed in a mold and injection molded by the film gate injection technique, with a polyamide 4.6 with $\eta$ rel = 1.76. In this technique the mold is filled from one side.

The plates obtained after cooling the mould, were given a heat treatment during 5.75 hours at 260¤C. Electromagnetic interference (EMI) shielding and other properties were measured.

The steel mats, that are rather fragil, had been completely incorporated in the polyamide matrix of the plates and retained their original shape.

In the same mould a polyamide 4.6, $\eta_{rel}$ = 3.0 composition containing different amounts of stainless steel fibres, Dry blend Bekishield of Bekaert, Belgium fibre length 4.5-6 mm, was injection moulded into plates (comparative example D).

The properties of these plates have been measured also.

The EMI shielding factor of the plates containing about 30 mg/cm$^2$ metal in the form of mats was twice the value of the plates produced by the conventional method with loose fibres.

The water adsorption of the plates according to the invention was 50% less than those of plates according to the state of the art.

The relative viscosity of the polyamide matrix was in both cases about 2.8.

## Characterisation methods

| Izod Impact resistance ASTM 256 | |
|---|---|
| modulus of elasticity at 25¤C according to ASTM D 638 | |
| $\eta_{rel}$ | relative viscosity of 1 gram per 100 ml of 96 wt% $H_2SO_4$ |
| $\Delta Hm_1$ | first melting enthalpy determined with differential scanning calorimetry at a heating rate of 20¤C per minute |
| $\Delta Hm_2$ | second melting enthalpy determined after complete melting followed by complete solidification of the sample. |
| $G''$ | torsion pendulum modulus at frequency 0.2153 HZ with a heating rate of 1¤C/minute |

## Claims

1. Process for the production of a moulded article, incorporating a continuous fibre reinforcement in a polyamide matrix, by casting the polyamide matrix around the continuous fibre reinforcement, that is contained in a mould, characterized in that the polyamide has low molecular weight and consist mainly of tetramethyleneadipamide units, and that after cooling the matrix to a temperature below the solidification temperature, the low molecular weight moulded article, thus obtained, is subjected to a heat treatment in the solid phase at a temperature of between, 220¤C and the melting point of the polyamide.

2. Process according to claim 1, characterized in that the low-molecular weight polytetramethylene adipamide has a relative viscosity of between 1.5 and 2.3

3. Process according to claim 2 characterized in that the relative viscosity is between 1.7 and 2.1.

4. Process according to any one of the claims 1-3, characterized in that the relative viscosity of the polytetramethylene adipamide after the heat treatment is at least 2.3.

5. Moulded polyamide article incorporating a continuous fibre reinforcement, characterized in that the polyamide consists mainly of tetramethyleneadipamide units and the relative viscosity of the polyamide in the article is at least 2.3.

6. Moulded polyamide article incorporating a continuous fibre reinforcement, characterized in that the polyamide consists mainly of tetramethyleneadipamide units and has an increased crystallinity of the polyamide, expressed as a first melting enthalpy, which is at least 30 joules per gram higher, than the melting enthalpy determined after melting and subsequent solidification of the polyamide; the first melting enthalpy being determined on a sample of the moulded article by differential scanning calorimetry (DSC) with a heating rate of 20¤C per minute, and the second melting enthalpy being determined after the molten polyamide has been cooled with a cooling rate of 20¤C per minute until below its crystallisation temperature and after complete solidification has been reheated with a heating rate of 20¤C per minute.

7. Moulded polyamide article according to claim 5, characterized in that the relative viscosity is at least 2.5.

8. Moulded polyamide article according to claim 6 characterized in that the first melting enthalpy is at least 40 Joule per gram higher.

9. Moulded polyamide article according to claim 5 and 6.

10. Moulded polyamide article according to claim 6 and 7.

11. Moulded polyamide article according to claim 7 and 8.

12. Moulded polyamide article according to any of the claims 5 to 11 characterized in that the continuous fibre reinforcement amounts 1 to 50% of the total weight of the article.

13. Moulded polyamide article according to claim 12 characterized in that the continuous fibre reinforcement contains metal fibres.

5

14. Finished objects comprising the moulded polyamide article according to any one of the claims 5-13.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 267 646 (STAMICARBON) <br> * Page 3, lines 10-22; page 4, lines 7-20 * | 1-14 | B 29 C 67/14 <br> B 29 C 71/02 <br> C 08 J 5/24 |
| Y | EP-A-0 133 340 (THE SECRETARY OF STATE FOR TRADE AND INDUSTRY IN HER BRITANNIC MAJESTY'S GOVERNMENT OF THE UNITED KINGDOM OF GREAT BRITAIN AND, NORTHERN IRELAND) <br> * Claims 1,2,4,6 * | 1-12,14 | |
| D,Y | US-A-4 446 304 (R.J. GAYMANS) <br> * Abstract; claims 1-10 * | 1-12,14 | |
| Y | EP-A-0 038 582 (STAMICARBON) <br> * Claims 1-6 * | 1-12,14 | |
| A | DE-A-2 605 508 (FORD WERKE AG) <br> * Claims 1-7 * | 1-3,13 | |
| A | GB-A- 957 915 (ICI LTD) <br> * Claims 1-7 * | 1,13 | TECHNICAL FIELDS SEARCHED (Int. Cl.4) <br><br> B 29 C <br> C 08 G |

The present search report has been drawn up for all claims

| Place of search | Date of completion of the search | Examiner |
|---|---|---|
| THE HAGUE | 18-07-1989 | WEINBERG J.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)